**Europäisches Patentamt**

**European Patent Office**

**Office européen des brevets**

(19)

(11) Veröffentlichungsnummer : **0 175 116 B2**

## (12) NEUE EUROPÄISCHE PATENTSCHRIFT

(45) Veröffentlichungstag der neuen Patentschrift :
**01.12.93 Patentblatt 93/48**

(51) Int. Cl.⁵ : **C08F 8/50,** C08F 20/00

(21) Anmeldenummer : **85109807.9**

(22) Anmeldetag : **05.08.85**

(54) **Verfahren zur Molekulargewichtserniedrigung von wasserlöslichem Polyacrylamid und Polyacrylnitrilhydrolysaten.**

(30) Priorität : **17.08.84 DE 3430233**

(43) Veröffentlichungstag der Anmeldung :
**26.03.86 Patentblatt 86/13**

(45) Bekanntmachung des Hinweises auf die
Patenterteilung :
**03.01.90 Patentblatt 90/01**

(45) Bekanntmachung des Hinweises auf die
Entscheidung über den Einspruch :
**01.12.93 Patentblatt 93/48**

(84) Benannte Vertragsstaaten :
**CH DE FR GB IT LI NL**

(56) Entgegenhaltungen :
**FR-A- 2 283 156**
**FR-A- 2 388 834**
**US-A- 4 182 807**

(56) Entgegenhaltungen :
**Chemical Abstracts, vol. 83, 79859g, 1975 &**
**Tr.Khim.Tekhnol. 1974, 2, pp. 125-126**
**H. Staudinger, Die hochmolekularen organi-**
**schen Verbindungen - Kautschuk und Cellu-**
**lose, Springer Verlag, Berlin, 1932, pp. 373-374**

(73) Patentinhaber : **Wolff Walsrode**
**Aktiengesellschaft**
**Postfach 15 15**
**D-29655 Walsrode (DE)**

(72) Erfinder : **Huhn, Helmut, Dr.**
**Nordsunderberg 13**
**D-3030 Walsrode (DE)**
Erfinder : **Karstens, Werner**
**Wenzinger Strasse 2**
**D-3036 Bomlitz (DE)**

(74) Vertreter : **Zobel, Manfred, Dr. et al**
**BAYER AG Konzernverwaltung RP Patente**
**Konzern**
**D-51368 Leverkusen (DE)**

EP 0 175 116 B2

## Beschreibung

Die Erfindung betrifft ein Verfahren zur Reduzierung des Molekulargewichts von wasserlöslichem Polyacrylamid und Polyacrylnitrilhydrolysaten indem man die Polymerisate mit Wasserstoffperoxid behandelt.

Wasserlösliche Hydrolyseprodukte von Polyacrylnitril mit niedrigen Molekulargewicht werden für viele Anwendungen benötigt.

So können als Dispergiermittel und/oder Pigmentverteiler zur Verhinderung der Gelierung und zum Abbau der Viskosität von mineralischen Suspensionen eingesetzt werden, ohne dabei das System zu verdicken. Das Molekulargewicht sollte für diese Anwendungen bei ≈ 20 000 liegen.

In den DE-OS 30 31 672 werden bereits Verfahren zur Herstellung von wäßrigen Lösungen von Polyacrylsäuren mit niedrigem Molekulargewicht beschrieben, indem die Acrylsäure in Gegenwart von 20-40 Gew.-%, bezogen auf die Monomermenge, an Essigsäure und/oder Propionsäure polymerisiert wird.

Gemäß der Lehre der DE-AS 27 57 329 werden Acrylsäurepolymerisate mit niedrigen Molekulargewicht erhalten, indem man die Polymerisation in Isopropanol oder einer Mischung aus Wasser und Isopropanol bei Temperaturen von 120-200 °C unter Druck durchführt.

Aus der FR-A-2 388 834 ist zwar bereits ein Verfahren zur Erniedrigung des Molekulargewichtes von Salzen der Polyacrylsäure beschrieben, jedoch handelt es sich hierbei um Poly-$\alpha$-hydroxyacrylsäuren. Aufgabe der vorliegenden Erfindung war es, ein Verfahren zur Erniedrigung des Molekulargewichtes von wasserlöslicher Polyacrylsäure bzw. deren Salzen, die nicht in $\alpha$-Stellung mit einer Hydroxylgruppe substituiert sind, von Polyacrylamid oder Polyacrylnitrilhydrolisaten zur Verfügung zu stellen.

Gegenstand der vorliegenden Erfindung sind daher Verfahren zur Erniedrigung des Molekulargewichtes von wasserlöslichem Polyacrylamid oder Polyacrylnitrilhydrolysaten, die dadurch gekennzeichnet sind, daß das Polymere mit 0,01-20 Gew.-% Wasserstoffperoxid, vorzugsweise 0,5-10 Gew.-%, bezogen auf das Polymere bei Temperaturen 20-100 °C, vorzugsweise 30-90 °C behandelt wird.

Als wasserlösliche Hydrolyseprodukte des Polyacrylnitrils können vorzugsweise solche Produkte verwendet werden, die gemäß des europäischen Patentes 0 047 381 hergestellt wurden. Dabei wird die Hydrolyse vorzugsweise soweit geführt, daß das Hydrolyseprodukt 30-80 Gew.-% Acrylsäureeinheiten, die bis zu 100 % als Ammonium- und/oder Alkali- und/oder Erdalkalimetallsalze, wie Na, K, Mg, vorliegen können.

Zur Erniedrigung des Molekulargewichts der wasserlöslichen Polymerisate werden diese vorzugweise in einen mit Rührwerk versehenen Autoklaven vorgelegt. Dabei wird das Polymerisat als eine mit einem pH-Wert von 4-9, vorzugsweise 5-8, 5 bis 60 Gew.-%ige, vorzugsweise 20-50 Gew.-%ige, wäßrige Lösung mit 0,01-20 Gew.-%, vorzugsweise 0,5-10 Gew.-%, bezogen auf das Polymere, Wasserstoffperoxid im Autoklaven mittels Rührwerk gemischt. Die Reaktionstemperatur wird bis auf 100 °C, vorzugsweise 30-90 °C, erhöht und der Ansatz bei dieser Temperatur, je nach gewünschten Molekulargewichtserniedrigung, 1-20, vorzugsweise 3-8 Stunden unter Rühren belassen. Je nach Einsatzkonzentration des Wasserstoffperoxids ist ein Druckanstieg bis ca. 20 bar möglich. Das Wasserperoxid wird vorzugsweise als 5-35 Gew.-%ige wäßrige Lösung eingesetzt.

In die Reaktionsmischung kann zusätzlich 0,05-0,15 Gew.-%, bezogen auf eingesetztes Polymerisat, eines geeigneten Entschäumungsmittels der Reaktion zugegeben werden. Durch diese Maßnahme wird erreicht, daß der bei der Reaktion entstandene Sauerstoff durch Erwärmen auf ca. 80-100 °C nahezu vollständig aus dem wäßrigen Polymerisat durch Öffnen eines Ventils entfernt werden kann.

Die Molekulargewichtsbestimmung erfolgte durch Messung der relativen Viskosität $\eta_{rel}$ von 1 g Polymeres in 100 ml 2 m NaNO$_3$-Lösung bei 25 °C im Ubbelohde-Viskosimeter.

Beispiel 1

Ein Hydrolysat eines Polyacrylnitrilcopolymerisates mit folgenden Analysendaten :

| | |
|---|---|
| Feststoffgehalt | 39 Gew.-% |
| pH-Wert | 6,5 |
| Carboxylgruppengehalt berechnet als polymeren Acrylsäure | 50 Gew.-% vom Feststoff |
| davon als Na-Salz | ca. 6 % |
| als NH$_4$-Salz | ca. 84 % |
| $\eta_{rel}$ | 1,56 |

2

In einem emaillierten, für 30 bar Druck ausgelegten und mit einem Impeller-Rührer versehenen Autoklaven werden 10 000 g der beschriebenen Polyelektrytlösung gegeben. Nach Zugabe von 3 g Entschäumer und 1 114,3 g wäßriger Wasserstoffperoxidlösung (35 Gew.-%) wird der Autoklav geschlossen und unter Rühren auf 80 °C aufgeheizt. Nach 4 Stunden bei 80 °C ist der Druck durch die $H_2O_2$-Zersetzung auf ca. 12 bar gestiegen. Durch Öffnen des Ventils wird der Druck auf Atmosphärendruck vermindert und der Ansatz gekühlt.

Beispiele 2-3

Verfahren wird nach Beispiel 1 mit dem Unterschied, daß 557,15 g bzw. 334,3 g der 35 %igen wäßrigen Wasserstoffperoxidlösung eingesetzt wurden.

Ergebnisse der Beispiele 1-3 und der unbehandelten Probe.

Tabelle 1

| Beispiel | zum Abbau eingesetzt Gew.-% $H_2O_2$ | Festkörper Gew.-% | $\eta$ rel |
|---|---|---|---|
| 1 | 10 | 35,1 | 1,17 |
| 2 | 5 | 37,0 | 1,28 |
| 3 | 3 | 37,8 | 1,36 |
| 0-Probe | 0 | 39,0 | 1,56 |

Beispiele 4-8

Das Molekulargewicht eines Hydrolysats eines Polyacrylnitrilcopolymerisates mit folgenden Analysenda-ten:

| | |
|---|---|
| Feststoffgehalt | 15,4 Gew.-% |
| pH-Wert | 7,6 |
| Na-Acrylat | 63,4 Gew.-% vom Feststoff |
| $\eta$rel | 7,46 |

wird nach den Reaktionsbedingungen, die in Tabelle 2 zusammengefaßt sind, reduziert.

(Siehe Tabelle Seite 4 f.)

| Beispiel | Einsatzmenge und Reaktionsbedingungen | | | | | erhaltenes Produkt | |
|---|---|---|---|---|---|---|---|
| | g Hydrolysat 15,4 Gew.-%ig | H₂O₂ 35 Gew.-ig | Entschäumer g | Temp. °C | Zeit h | Festkörper Gew.-% | rel |
| 4 | 5 000 | 0,217 | 1 | 80 | 4 | 15,4 | 7,35 |
| 5 | 5 000 | 2,17 | 1 | 80 | 4 | 15,4 | 6,35 |
| 6 | 5 000 | 21,7 | 1 | 80 | 4 | 15,2 | 2,62 |
| 7 | 5 000 | 217,0 | 1 | 80 | 4 | 14,5 | 1,52 |
| 8 | 5 000 | 434,3 | 1 | 80 | 4 | 14,1 | 1,41 |
| 0-Probe | 5 000 | 0 | 1 | 80 | 4 | 15,4 | 7,42 |

**Patentansprüche**

1. Verfahren zur Erniedrigung des Molekulargewichts von wasserlöslichem Polyacrylamid oder

4

Polyacrylnitrilhydrolysaten, dadurch gekennzeichnet, daß eine wäßrige Polymerlösung, die einen pH-Wert von 4-9 hat, mit 0,01-20 Gew.-%, bezogen auf das Polymere, Wasserstoffperoxid bei 20-100 °C behandelt wird.

2. Verfahren nach Anspruch 1, dadurch gekennzeichnet, daß die Polymerlösung mit 0,5-10 Gew.-% Wasserstoffperoxid behandelt wird.

3. Verfahren nach Anspruch 1 und 2, dadurch gekennzeichnet, daß das Wasserstoffperoxid als 5-35 Gew.-%ige, wäßrige Lösung eingesetzt wird.

4. Verfahren nach Ansprüchen 1-3, dadurch gekennzeichnet, daß eine bis 60 Gew.-%ige wäßrige Lösung des Polymeren eingesetzt wird.

5. Verfahren nach Ansprüchen 1-4, dadurch gekennzeichnet, daß eine 20-50 Gew.-%ige, wäßrige Lösung des Polymeren eingesetzt wird.

6. Verfahren nach Ansprüchen 1-5, dadurch gekennzeichnet, daß die Behandlung bei 30-90 °C in Autoklaven unter Rühren durchgeführt wird.

7. Verfahren nach Ansprüchen 1-6, dadurch gekennzeichnet, daß der Reaktionsmischung zusätzlich 0,05-0,15 Gew.-% eines Entschäumungsmittel zugesetzt wird.

8. Verfahren nach Ansprüchen 1-7, dadurch gekennzeichnet, daß während der Behandlung der entstehende Sauerstoff entfernt wird.

## Claims

1. A process for reducing the molecular weight of water-soluble polyacrylamide or polyacrylonitrile hydrolyzates, characterized in that an aqueous polymer solution having a pH value of 4 to 9 is treated with 0.01 to 20 % by weight, based on the polymer, of hydrogen peroxide at 20 to 100 °C.

2. A process as claimed in claim 1, characterized in that the polymer solution is treated with 0.5 to 10 % by weight of hydrogen peroxide solution.

3. A process as claimed in claims 1 and 2, characterized in that the hydrogen peroxide is used in the form of a 5 to 35 % by weight solution.

4. A process as claimed in claims 1 to 3, characterized in that a 60 % by weight aqueous solution of the polymer is used.

5. A process as claimed in claims 1 to 4, characterized in that a 20 to 50 % by weight aqueous solution of the polymer is used.

6. A process as claimed in claims 1 to 5, characterized in that the treatment is carried out with stirring in an autoclave at 30 to 90 °C.

7. A process as claimed in claims 1 to 6, characterized in that 0.05 to 0.15 % by weight of a foam inhibitor is also added to the reaction mixture.

8. A process as claimed in claims 1 to 7, characterized in that the oxygen formed is removed during the treatment.

## Revendications

1. Procédé pour l'abaissement du poids moléculaire du polyacrylamide ou des hydrolysats de polyacrylonitrile solubles dans l'eau, caractérisé en ce que l'on traite à 20 - 100 °C une solution aqueuse de polymère, ayant un pH de 4 - 9, par 0,01 - 20 % en poids de peroxyde d'hydrogène, par rapport au polymère.

2. Procédé selon la revendication 1, caractérisé en ce que la solution de polymère est traitée par 0,5 - 10 % en poids de peroxyde d'hydrogène.

3. Procédé selon la revendications 1 et 2, caractérisé en ce que le peroxyde d'hydrogène est utilisé en solution aqueuse à 5 - 35 % en poids.

4. Procédé selon les revendications 1 - 3, caractérisé en ce que l'on utilise une solution aqueuse jusqu'à 60 % en poids du polymère.

5. Procédé selon les revendications 1 - 4, caractérisé en ce que l'on utilise une solution aqueuse à 20 - 50 % en poids du polymère.

6. Procédé selon les revendications 1 - 5, caractérisé en ce que le traitement est mis en oeuvre en autoclave à 30 - 90 °C avec agitation.

7. Procédé selon les revendications 1 - 6, caractérisé en ce que l'on ajoute encore au mélange de réaction 0,05 - 0,15 % en poids d'un agent anti-mousse.

8. Procédé selon les revendications 1 - 7, caractérisé en ce que l'on èlimine pendant le traitement l'oxygène formé.